# EUROPÄISCHE PATENTANMELDUNG

(11) **EP 2 098 723 A2**
(43) Veröffentlichungstag der Anmeldung: **09.09.2009**
(21) Anmeldenummer: 09003108.9
(22) Anmeldetag: 04.03.2009
(51) Int. Cl.: F03D 3/06

(54) **Optimierter Rotor für eine Windkraftanlage und Windkraftanlage zur Montage auf einem Gebäude**

(30) Priorität: 05.03.2008 DE 102008012587
(71) Anmelder: Gerd Eisenblätter GmbH, D-82538 Geretsried (DE)
(72) Erfinder: Eisenblätter, Gerd, 82538 Geretsried (DE)
(74) Vertreter: Lang, Friedrich

(57) **Zusammenfassung**

Rotor für eine Windkraftanlage zur Montage auf einem Gebäude, insbesondere mit einer vertikalen Drehachse, mit einer Rotornabe und wenigstens einem Rotorblatt, wobei das Rotorblatt vollflächig ausgebildet ist und im wesentlichen eine rechteckige Form aufweist, mit einer radial innen liegenden Kante, einer radial außen liegenden Kante, einer sich radial erstreckenden unteren und einer sich radial erstreckenden oberen Kante, wobei dieses Rotorblatt ausgehend von seiner unteren Kante in Richtung der oberen Kante spiralförmig um die Rotornabe verdreht ausgebildet ist. Des Weiteren Windkraftanlage mit einem solchen Rotor.

## Beschreibung

Die vorliegende Erfindung betrifft einen Rotor für eine Windkraftanlage mit einer vorzugsweise vertikal verlaufenden bzw. ausgerichteten Drehachse. Die Erfindung betrifft fernerhin eine Windkraftanlage zur Montage und insbesondere Dachmontag auf Gebäuden.

Windkraftanlagen zur Montag auf bzw. an einem Gebäude sind aus dem Stand der Technik bekannt. Die Patentschriften DE 100 07 199 A1 und DE 196 44 890 A1 zeigen solche Windkraftanlagen (bzw. Windenergiekonverter) deren Rotoren eine liegende bzw. horizontale Ausrichtung aufweisen. Nachteilig bei solchen Windkraftanlagen ist eine starke Abhängigkeit von der Windrichtung. Des weiteren sind aus dem Stand der Technik Windkraftanlagen bekannt, deren Rotoren eine senkrechte bzw. vertikale Drehachse aufweisen, wie bspw. in der DE 43 31 073 C1 und DE 43 19 291 C1 beschrieben. Windkraftanlagen mit einer vertikalen Drehachse für den Rotor sind von der Windrichtung weitgehend unabhängig, nachteilig ist hingegen ein geringerer Wirkungsgrad. Die Verbesserung des Wirkungsgrads bei solchen Anlagen ist seit langem Gegenstand zahlreicher Weiterentwicklungen, wie im einleitenden Teil der DE 43 19 291 C1 beschrieben.

Die Rotoren für solche Windkraftanlagen müssen eine hohe Stabilität und Festigkeit aufweisen, um Windkräfte und aus der Drehung resultierende Fliehkräfte aufnehmen zu können. Zudem werden die Rotoren auch schwingend beansprucht, was insbesondere dann kritisch ist, wenn die Schwingungen im Bereich der Resonanzfrequenzen des Rotors liegen.

Für die Montage an einem Gebäude bzw. auf einem Gebäudedach werden darüber hinaus weitergehende Anforderungen gestellt. So sollen die Rotoren selbsterklärend leicht sein. An Schrägdächern wird der anströmende Wind strömungsbedingt beschleunigt, so dass sowohl auf den Rotor (als auch auf die gesamte Windkraftanlage) verhältnismäßig starke Kräfte einwirken, die von der Rotorlagerung aufgenommen und in die Dachkonstruktion abgeleitet werden müssen. Wegen der vertikalen Drehachse kann jedoch nur eine einseitige Lagerung des Rotors erfolgen, nämlich am unteren (dem Dach zugewandten) Ende der Drehachse, während das andere Ende der Drehachse unbefestigt vom Dach abragt und quasi fliegend ausgebildet ist. Zudem sollen Schwingungen des Rotors bzw. der Windkraftanlage weitgehend vermieden werden, die ebenfalls in die Dachkonstruktion abgeleitet werden müssten. Fernerhin sind selbst minimale Geräuschentwicklungen (Pfeifgeräusche durch die Windströmung oder Rumpelgeräusche aus der Rotorlagerung) unerwünscht, da sich die Geräusche über die Gebäudekonstruktion hörbar im Gebäude ausbreiten.

Aufgabe der Erfindung ist es, den Wirkungsgrad für eine Windkraftanlage zur Montage auf einem Gebäude zu verbessern. Die Windkraftanlage soll zudem einen leichten und steifen, sowie schwingungsarmen Rotor mit vorzugsweise vertikaler Drehachse aufweisen.

Diese Aufgabe wird gelöst durch einen Rotor nach dem Patentanspruch 1. Die Aufgabe wird auch gelöst von einer Windkraftanlage nach dem nebengeordneten Patentanspruch. Die hiervon abhängigen Patentansprüche betreffen vorteilhafte Weiterbildungen und Ausgestaltungen.

Der erfindungsgemäße Rotor weist eine Rotornabe, welche die Drehachse des Rotors umschließt bzw. durch welche die Drehachse zumindest teilweise hindurch läuft, und wenigstens ein Rotorblatt auf. Das Rotorblatt ist vollflächig ausgebildet, wobei unter vollflächig eine im wesentlichen geschlossene und gefüllte Fläche verstanden wird. Fernerhin weist das Rotorblatt eine im wesentlichen rechteckige Form auf (wobei sich diese Formangabe vorrangig auf eine ebene Schatten- bzw. Projektionsfläche des Rotorblatts bezieht), mit einer radial innen liegenden Kante (innere Kante), einer radial außen liegenden Kante (äußere Kante), einer sich radial von innen nach außen erstreckenden unteren und einer sich radial von innen nach außen erstreckenden oberen Kante (untere und obere Kante). Die Richtungsangaben "unten" und "oben" beziehen sich auf eine bevorzugte Einbaulage des Rotors. Die Richtungsangaben "radial innen" und "radial außen" beziehen sich auf einen gedachten Zylinder und dessen Mittelachse, der den gesamten Rotor umschreibt.

Das Rotorblatt ist erfindungsgemäß von seiner unteren Kante in Richtung der oberen Kante spiralförmig oder auch schrauben- bzw. windungsartig um die Rotornabe verdreht ausgebildet. Die spiralförmige Verdrehung ist dabei insbesondere stetig. Bevorzugt sind mehrere Rotorblätter vorgesehen; nachfolgende Ausführungen beziehen sich daher nicht einschränkend auf eine Vielzahl von Rotorblättern.

Bevorzugt handelt es sich bei dem erfindungsgemäßen Rotor um einen solchen mit vertikaler Drehachse, da hier die Vorteile der Erfindung besonders deutlich hervortreten. Durch die spiralförmig verdrehte Ausbildung der Rotorblätter kann bei einer Dachmontage der an den Dach-Schrägflächen beschleunigte Wind optimal genutzt werden, da sich die Rotorblätter insbesondere mit ihren oberen Flächenabschnitten der Windströmung entgegenstellen, wodurch sich der Wirkungsgrad signifikant erhöht. Die gleichzeitig rechteckige Ausbildung der Rotorblätter bewirkt an jedem Rotorblatt eine homogenen Kraft- bzw. Druckverteilung über der Rotorblattfläche, resultierend aus den angreifenden Windkräften.

Bevorzugt ist die Rotornabe als Hohlzylinder ausgebildet. Ein solcher Hohlzylinder kann auf einen korrespondierenden Zapfen aufgesetzt werden (der seinerseits fest am Gebäude angeordnet ist), wodurch eine Drehlagerung gebildet wird. Zur Reibungsreduzierung und/oder Befestigung des Rotors auf dem Zapfen können Wälzlager eingesetzt werden.

Bevorzugt ist ein Rotorblatt mit seiner innen liegenden Kante an der Rotornabe befestigt, bspw. von einer korrespondierenden Längs-Nut.auf der Außenfläche der Rotornabe formschlüssig aufgenommen. Dadurch ergibt sich eine stabile Kraft- bzw. Momentenübertragung von dem Rotorblatt auf die Rotornabe. Insbesondere ist das Rotorblatt mit seiner innen liegenden Kante im Wesentlichen über seine gesamte Höhe an der Rotornabe befestigt.

Nach einer bevorzugten Weiterbildung ist vorgesehen, dass die innen liegende Kante eines Rotorblatts gerade und parallel zur Drehachse des Rotors verläuft, während die außen liegende Kante des Rotorblatts gerade und windschief zur Drehachse orientiert ist. Eine solche Gestaltung bzw. Ausrichtung der Kanten verbessert u.a. die Homogenität der Druckverteilung auf einem Rotorblatt.

Bevorzugt ist zudem, dass ein Rotorblatt an der Rotornabe unter einem Flächenwinkel befestigt ist, der kleiner als 90° ist. Der radial innen liegende Flächenabschnitt eines Rotorblatts mündet somit nicht senkrecht, d.h. in Richtung auf die Drehachse, in die Rotornabe ein. Dies lässt sich sehr leicht veranschaulichen, wenn man an die Außenfläche der Rotornabe eine Tangente bzw. entlang der Befestigungslinie bzw. Längs-Nut eine Tangentenfläche anlegt. Das Rotorblatt ist unmittelbar an der Rotornabe in Richtung des anströmenden Windes bzw. entgegen der Drehrichtung des Rotors angestellt, wobei der Anstellwinkel (bezogen auf die gedachte Tangente bzw. Tangentenfläche) im Bereich von 50° bis 70° liegt und bevorzugt in etwa 60° beträgt. Hieraus ergibt sich u.a. eine verbesserte Kraft- bzw. Momentenübertragung von dem Rotorblatt auf die Rotornabe.

Weiterhin ist bevorzugt vorgesehen, dass die unten liegende Kante eines Rotorblatts gerade ausgebildet ist, wobei sich diese Formangabe wieder vorrangig auf eine ebene Schatten- bzw. Projektionsfläche des Rotorblatts bezieht. Bevorzugt ist auch vorgesehen, dass die oben liegende Kante eines Rotorblatts gerade ausgebildet ist Ebenfalls bevorzugt ist, dass sowohl die oben liegende als auch die unten liegende Kante eines Rotorblatts bezogen auf die Drehachse des Rotors im wesentlichen senkrecht orientiert bzw. ausgerichtet sind.

Gemäß einer vorteilhaften Weiterbildung ist ein Rotorblatt zwischen seiner innen liegenden Kante und seiner außen liegenden Kante bezogen auf die Windanströmrichtung konkav ausgebildet. Das Rotorblatt ist bevorzugt über seine gesamte Höhe, d.h. zwischen seiner unten liegenden Kante und seiner oben liegenden Kante, konkav ausgebildet.

Gemäß einer ebenfalls vorteilhaften Weiterbildung ist ein Rotorblatt als dünnwandiges Freiflächen-Formteil mit im wesentlichen konstanter. Wanddicke ausgebildet. Trotz eines geringen Gewichts ergibt sich damit für das Rotorblatt eine hohe Stabilität (bzw. Steifigkeit und Festigkeit), die aus der Verwindung der Fläche resultiert.

Um die Stabilität eines Rotorblatts zu erhöhen, ist zudem vorgesehen, dass dieses an seiner unteren oder an seiner oberen Kante, oder zugleich an diesen beiden Kanten, eine Versteifung aufweist. Die Versteifung kann bspw. als ein diese Kanten umgreifendes U-Profil ausgebildet sein. Bevorzugt erstreckt sich die Versteifung von radial innen nach radial außen über etwa zwei Drittel bis etwas drei Viertel der Kantenlänge.

Weiterhin ist es vorteilhaft, wenn ein Rotorblatt zwischen seiner außen liegenden Kante und seiner oben liegenden eine abgeschrägte bzw. abegrundete Ecke aufweist. Ebenso ist es vorteilhaft, wenn ein Rotorblatt zwischen seiner außen liegenden Kante und seiner unten liegenden Kante eine abgeschrägte bzw. abgerundete Ecken aufweist. U.a. lassen sich somit nachteilige Turbulenzen verringern, welche von scharfen Kanten verursacht werden, was auch zu Schwingungen führt. Auch die Geräuschentwicklung des Rotors kann reduziert werden.

Bevorzugt ist ein Rotorblatt aus einem Faserverbund, insbesondere einem Fasernverbund mit Naturfasern und Binder, gebildet. Hieraus ergibt sich ein äußerst leichtes, schwingungs- und geräuschedämpfendes Rotorblatt, welches aber dennoch eine hohe Stabilität aufweist.

Besonders bevorzugt ist, dass der erfindungsgemäße Rotor sieben oder neun im Wesentlichen gleich ausgebildete Rotorblätter aufweist, die in gleichen Winkelabständen um die Rotornabe herum angeordnet sind. In Simulationen und Versuchen konnte aufgefunden werden, dass durch genau diese Anzahl von Rotorblättern ein hoher Wirkungsgrad erzielt werden kann, mit einem noch vertretbaren Ausmaß an erzeugten Turbulenzen. Dies trägt auch zu einer geringen Geräuschentwicklung bei.

Die erfindungsgemäße Windkraftanlage zur Montage, insbesondere Dachmontage, auf einem Gebäude umfasst einen Rotor nach wenigstens einer der zuvor erläuterten Ausführungen.

Eine bevorzugte Weiterbildung der erfindungsgemäßen Windkraftanlage umfasst einen Windabweiser bzw. ein Windschott, das zumindest teilweise zur Abdeckung der gegen die Windrichtung zurückbewegten Rotorblätter dient und somit deren Rückflächen vor dem anströmenden Wind abschirmt. Bevorzugt ist dieser Windabweiser in Form einer Rohrhalbschale ausgebildet, welche die Mantelfläche eines gedachten den gesamten Rotor umschreibenden Zylinders zumindest entlang des halben Umfangs abdeckt. Die Höhe des Windabweisers entspricht bevorzug in etwa der Höhe der Rotorblätter. Dadurch lässt sich der Wirkungsgrad der Windkraftanlage signifikant erhöhen. Insbesondere ist vorgesehen, dass sich der Windabweiser in Abhängigkeit von der Windrichtung selbst ausrichtet. Bevorzugt ist auch der Windabweiser aus einem Faserverbund, insbesondere mit Naturfasern, gebildet.

Vorteilhafterweise gehört zur erfindungsgemäßen Windkraftanlage auch wenigstens ein Generator, der die durch den Rotor erzeugte Bewegungsenergie in eine andere Energieform, insbesondere Strom, konvertiert. Dabei ist vorgesehen, dass dieser Generator nicht in unmittelbarer Nähe zum Rotor angeordnet ist, sondern entfernt von diesem, d.h. mit einem vorbestimmten Abstand, bevorzugt in vertikaler Richtung der Drehachse des Rotors. Die Übertragung der Bewegungsenergie vom Rotor auf den Generator erfolgt mittels einer Übertragungseinrichtung, wie insbesondere einer Antriebswelle. Eine solche Übertragungseinrichtung kann eine oder mehrere Antriebswellen und Getriebekomponenten umfassen. Unter einer Antriebswelle wird jede axial ausgebildete Einrichtung verstanden, die zur mechanischen Übertragung von Drehungen (bzw. Drehmomenten) geeignet ist. Getriebekomponenten können bspw. Kardangelenke, Richtungsumkehrer und Drehmomentwandler sein.

Eine solche Übertragungseinrichtung kann auch die Bewegungsenergie von einem Rotor auf mehrere Generatoren oder von mehreren Rotoren auf einen oder mehrere Generatoren übertragen.

Insbesondere bevorzugt ist hierbei, dass der Generator im Dachbereich eines Gebäudes angeordnet ist, wo dieser vor Witterungseinflüssen geschützt und auch zu Wartungszwecken leicht zugänglich ist. Durch eine solche Anordnung des Generators ergeben sich auch statische Vorteile. Die Übertragungseinrichtung ist hierbei zumindest teilweise von einer Aufnahme aufgenommen und/oder in dieser geführt. Bevorzugt ist vorgesehen, dass diese Aufnahme gleichzeitig zur Befestigung des Rotors (bzw. der Rotoren) auf dem Gebäudedach (oder dergleichen) dient, was den Montageaufwand für die Windkraftanlage deutlich reduziert. In einer bevorzugten Ausführungsform ist eine solche Aufnahmeeinrichtung ein Rohr, insbesondere mit Kreisquerschnitt.

Die Erfindung soll nachfolgend im Zusammenhang mit den Figuren anhand eines bevorzugten Ausführungsbeispieles näher erläutert werden. Die Figuren werden vollumfänglich in den Offenbarungsgehalt mit einbezogen, dies gilt insbesondere auch für die gezeigten, aber im Text nicht näher erläuterten Merkmale. Es zeigen:
- Figur 1: eine schematische Prinzipskizze für eine auf einem Gebäude angeordnete Windkraftanlage;
- Figur 2: einen erfindungsgemäßen Rotor in einer perspektivischen Seitenansicht;
- Figur 3: den erfindungsgemäßen Rotor aus der Figur 2 in einer perspektivischen Unteransicht;
- Figur 4: den erfindungsgemäßen Rotor aus der Figur 2 in einer perspektivischen Draufsicht;
- Figur 5: den erfindungsgemäßen Rotor aus der Figur 2 in einer anderen perspektivischen Seitenansicht;
- Figur 6: die Abwicklung eines Rotorblatts nach der Figur 2 in der Ebene; und
- Figur 7: eine schematische Seitenansicht des Gebäudes nach Figur 1 mit einem teilweise aufgeschnittenen Dach.

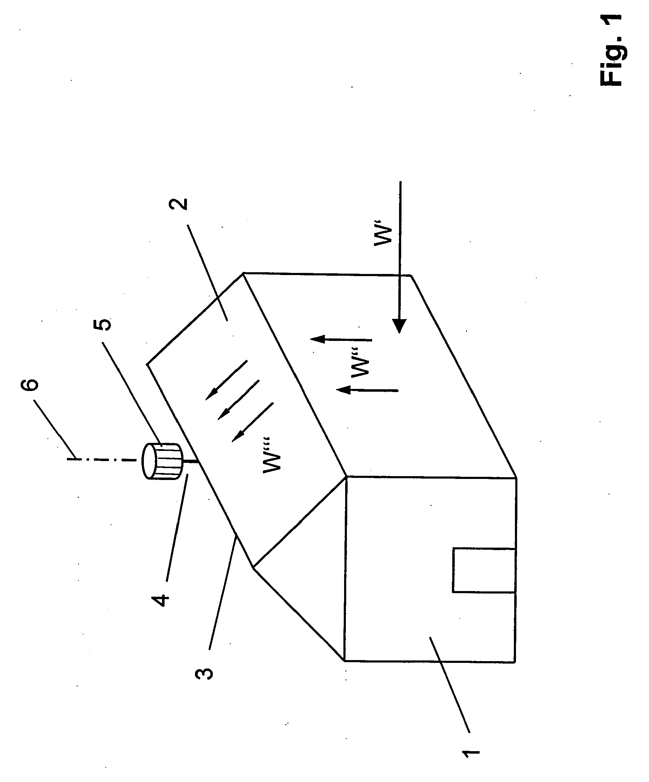

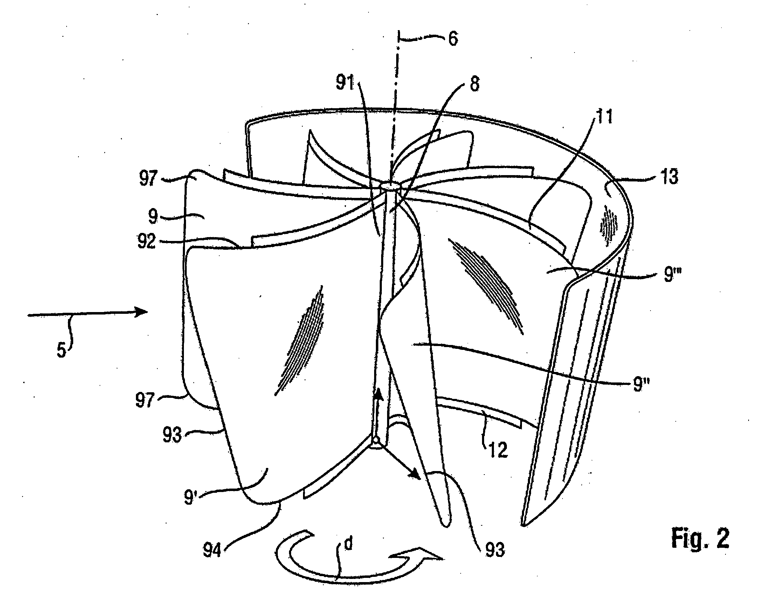

Die Figur 1 zeigt ein insgesamt mit 1 bezeichnetes Gebäude mit einem Dach, in diesem Fall einem Satteldach 2. Das Gebäude 1 ist einer Windströmung w' ausgesetzt. Bei der Umströmung des Gebäudes kommt es strömungstechnisch bedingt zu einer Beschleunigung der Windströmung bzw. des Windes, was durch die Pfeile w" und w''' dargestellt ist und die am Dachfirst 3 ein Maximum erreicht. Zur Ausnutzung dieser hohen Windgeschwindigkeiten ist am Dachfirst 3 eine mit 4 bezeichnete Windkraftanlage angeordnet, die einen um eine vertikale Achse 6 drehbaren Rotor 5 aufweist. Ein bevorzugtes Ausführungsbeispiel des Rotors 5 ist nachfolgend im Zusammenhang mit den Figuren 2 bis 6 näher beschrieben.

Figur 2 zeigt den erfindungsgemäßen Rotor 5 in einer bevorzugten Ausführungsform. Dieser weist eine Rotornabe 8 auf, die als Hohlzylinder ausgebildet ist und auf einem nicht dargestellten Wellenzapfen aufgesetzt werden kann, wodurch ein Drehlagerung gebildet wird. Der Rotor 5 umfasst zudem sieben Rotorblätter 9, die an der Rotornabe 8 in gleichen Winkelabständen angeordnet bzw. befestigt sind. Durch die nachfolgend noch näher erläuterte Rotorblattform ist eine Drehrichtung d des Rotors (siehe Pfeildarstellung) vorgegeben.

Die Rotorblätter 9 sind vollflächig ausgebildet und weisen eine im wesentlichen rechteckförmige Kontur auf, was man sehr gut an dem mit 9''' bezeichneten Rotorblatt erkennen kann. Die Angabe "rechteckig" bezieht sich hierbei auf eine direkte Vorderansicht auf ein solches Rotorblatt (bzw. auf eine entsprechende Schatten- bzw. Projektionsfläche). Jedes Rotorblatt weist eine innen liegende Kante (innere Kante) 91, eine oben liegende Kante (obere Kante) 92, eine außen liegende Kante (äußere Kante) 93 und eine unten liegende Kante (untere Kante) 94 auf, die bezogen auf die rechteckige Form gerade ausgebildet sind. Daraus ergibt sich, dass die oben liegende Kante 92 und die unten liegende Kante 94 bezogen auf die Drehachse 6 rechtwinklig orientiert sind. In den Eckbereichen zwischen den oberen Kanten 92 und den äußeren bzw. außen liegenden Kanten 93 sind die Rotorblätter mit einer Verrundung 97 ausgebildet, wodurch Turbulenzen in diesem Bereich verringert werden. Gleiches gilt für die Eckbereiche zwischen den unteren Kanten 94 und den äußeren Kanten 93.

Die Rotorblätter 9 sind an der Rotornabe 8 entlang einer geraden Linie parallel zur Drehachse 6 befestigt, was man sehr gut im dargestellten Zwischenraum zwischen den Rotorblättern 9' und 9" erkennen kann. Wie man ebenfalls sehr gut aus der Figur 2 entnehmen kann, sind die Rotorblätter 9 als dünnwandige Freiflächen-Formteile mit im wesentlichen konstanter Wanddicke ausgebildet.

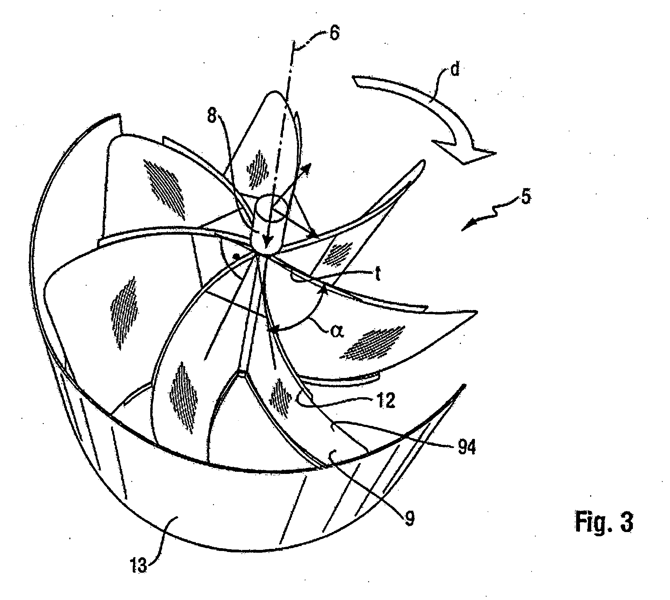

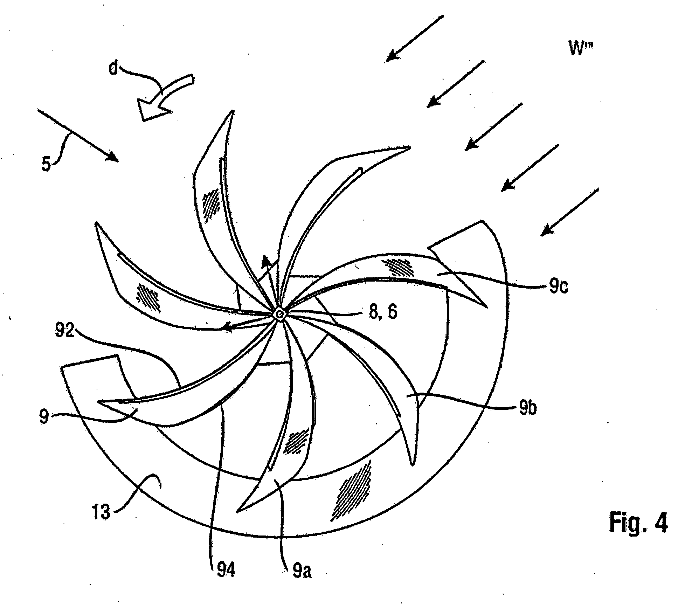

Jedes Rotorblatt 9 ist ausgehend von seiner unteren Kante 94 in Richtung auf seine obere Kante 92 spiralförmig um die Rotornabe 8 verdreht. Damit sind die Rotorblätter dem über die Dachschräge anströmenden Wind zugewandter, wodurch sich der Wirkungsgrad der Windkraftanlage 4 verbessert. Infolge dieser gleichmäßigen (im Sinne von stetig) spiralförmigen Verwindung der Rotorblätter 9 sind die äußeren Kanten 93 der Rotorblätter 9 windschief zur Drehachse 6 orientiert, was man sehr gut an dem mit 9" bezeichneten Rotorblatt erkennen kann. Zudem weist jedes Rotorblatt 9 zwischen seiner inneren Kante 91 und seiner äußeren Kante 93 eine konkave Ausbauchung in Drehrichtung auf, die über der gesamte Höhe des Rotorblatts, d.h. zwischen der unteren Kante 94 und der oberen Kante 92 ausgebildet ist. Diese konkave Ausbildung führt im Querschnitt betrachtet (senkrecht zur Drehachse 6) zu einer Spiralarmstruktur des Rotors, was sehr gut aus den nachfolgend noch näher erläuterten Figuren 3 und 4 ersichtlich ist.

Die Rotorblätter 9 sind an ihren oberen Kanten 92 und an ihren unteren Kanten 94 mit einer Versteifung versehen, welche die betreffenden Kanten zumindest über einen Teil ihrer Länge überdeckt. Eine zu weit nach außen führende Versteifung würde das Trägheitsmoment des Rotors 5 unverhältnismäßig stark erhöhen, was dessen Ansprechverhalten (Reaktionsvermögen auf Windgeschwindigkeitsänderungen) deutlich verschlechtern würde.

In Figur 2 ist ferner ein zur Windkraftanlage 4 gehörender Windabweiser 13 dargestellt, welche die Rückflächen der gegen den anströmenden Wind zurückbewegten Rotorblätter abdeckt, womit der Wirkungsgrad der Windkraftanlage signifikant erhöht werden kann (anderenfalls würden die Rotorblätter zu einem großen Teil gegeneinander arbeiten). Die Höhe des Windabweisers 13 entspricht in etwa der Höhe der Rotorblätter 9 (womit der vertikale Abstand zwischen den unteren Kanten 94 und den oberen Kanten 92 gemeint ist).

Die Figur 3 zeigt den erfindungsgemäßen Rotor in einer perspektivischen Unteransicht. Man erkennt hier sehr gut die hohlzylindrische Ausbildung des Rotornabe 8 und die Anordnung der sieben Rotorblätter 9 in gleichen Winkelabständen an der Rotornabe 8. Ebenfalls ist in dieser Darstellung die bereits oben beschriebene Spiralarmstruktur des Rotors 5 sehr gut erkennbar. Auch sind die Versteifungen 12 für die unteren Kanten 94 der Rotorblätter 9 gut sichtbar. Sämtliche Versteifungen 12 können an einem radial innen liegenden Ring angeordnet sein, womit eine einteilige Ausbildung ermöglicht wird. Selbiges gilt für die Versteifungen 11 an den oberen Kanten 92 der Rotorblätter 9.

Mit Hilfslinien dargestellt ist zudem die Anstellung der Rotorblätter 9 relativ zur Rotornabe 8. Der innere Flächenabschnitt eines Rotorblatts 9 mündet nicht senkrecht in die Rotornabe 8 ein, sondern bezogen auf eine Tangente t unter einem Flächen- bzw. Anstellwinkel α, der kleiner als 90° ist und in etwa 60° beträgt. Hieraus ergibt sich eine stabilere Befestigung des Rotorblatts 9 an der Rotornabe 8 und eine effektivere Kraft- bzw. Momentenübertragung.

Die Figur 4 zeigt den erfindungsgemäßen Rotor 5 in einer perspektivischen Draufsicht. Man erkennt hier sehr gut, dass aufgrund der spiralförmig um die Rotornabe 8 verdrehten Rotorblätter 9 deren unteren Kanten 94 gegenüber den oberen Kanten 92 vorlaufen, bezogen auf die Drehrichtung d. Zudem erkennt man, das der Windabweiser 13 ebenfalls als dünnwandiges Freiflächen-Formteil gebildet ist und in etwa die Form eines Halbrohres bzw. einer Halbrohrschale aufweist. Bei einer mit w"' bezeichneten Windanströmung werden die Rückflächen der gegen diese Windrichtung w''' zurückbewegten Rotorblätter 9a, 9b und 9c abgeschirmt. Bevorzugt richtet sich dieser Windabweiser 13 in Abhängigkeit von der Windrichtung selbst aus, wozu er drehbar an der Windkraftanlage 4 gelagert ist (nicht dargestellt).

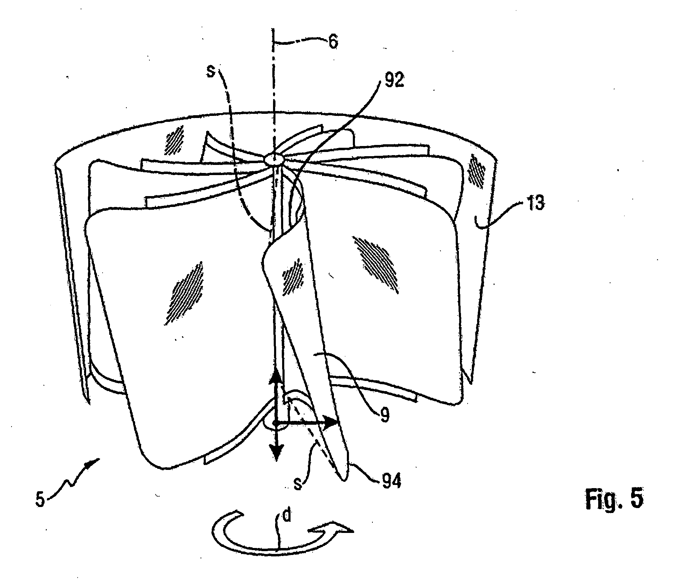

Die Figur 5 zeigt den erfindungsgemäßen Rotor 5 in einer perspektivischen Seitenansicht, die im wesentlichen mit jener der Figur 2 identisch ist. Die Windabweiser 13 befindet sich hier jedoch in einer anderen Position, nämlich hinter dem Rotor 5. Aus dieser Ansicht ist sehr gut die konkave Ausbildung der Rotorblätter 9 ersichtlich, wozu aus Gründen der verbesserten Darstellung an der oberen Kante 92 und and der unteren Kante 94 des dem Betrachter nächst liegenden Rotorblatts 9 jeweils mit gestrichelter Linie eine Sekante s eingezeichnet ist. Mit der Hilfsdarstellung der Sekanten s erkennt man auch sehr gut, wie das Rotorblatt 9 ausgehend von seiner unteren Kante 94 in Richtung der oberen Kante 92 spiralförmig um die Rotornabe 8 verdreht ausgebildet ist und dabei eine über die Höhe im wesentlichen gleich ausgebildete Konkavität aufweist. Aus der Darstellung der Figur 5 lässt sich ebenfalls sehr gut der Schrägstellungswinkei der außen liegenden bzw. äußeren Kante 93 gegenüber der Drehachse 6 erkennen, der bevorzugt in einem Bereich von 10° bis 20° liegt und hier in etwa 15°, 16° oder 17° beträgt (wobei jeder dieser Einzel-Werte insbesondere bevorzugt ist).

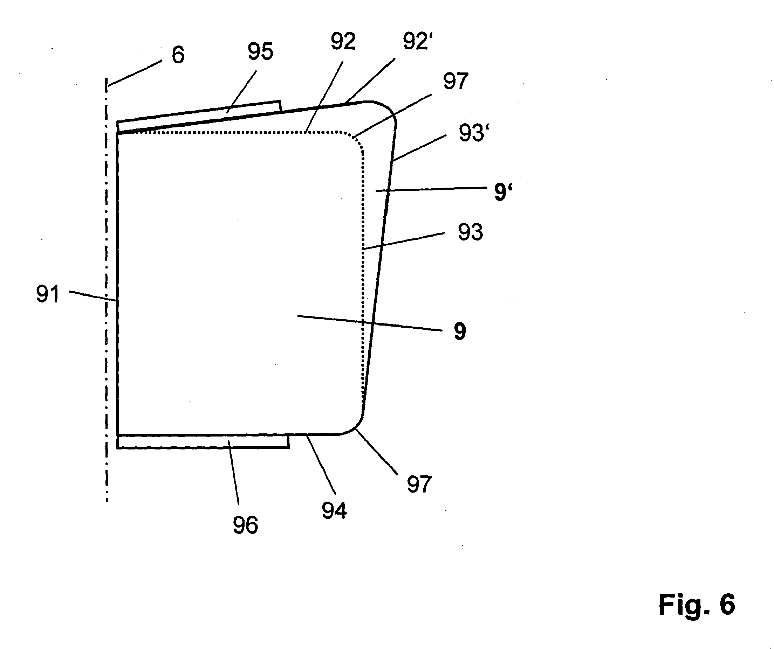

Ein in der Ebene abgewickeltes Rotorblatt 9 der oben beschriebenen Ausführungsart hätte die in der Figur 6 gezeigte Form, die im wesentlichen einem Trapez entspricht. Aus einem solchen Zuschnitt könnte das Rotorblatt 9 bspw. aus einem Blechmaterial geformt werden. Durch Umformung des Zuschnitts 9' würde sich die gestrichelt dargestellte bereits oben beschriebene Rechteckform ergeben, bei welcher die äußere Kante 93 (vorher 93') parallel zur Drehachse 6 ist und die obere Kante 92 (vorher 92') und die untere Kante 94 im wesentlichen senkrecht zur Drehachse 6 sind. Der an der oberen Kante 92 vorhanden Streifen 95 dient der Befestigung der oberen Versteifung 11. Der an der unteren Kante 94 vorhandene Streifen 96 dient der Befestigung der unteren Rotorblatt-Versteifung 12.

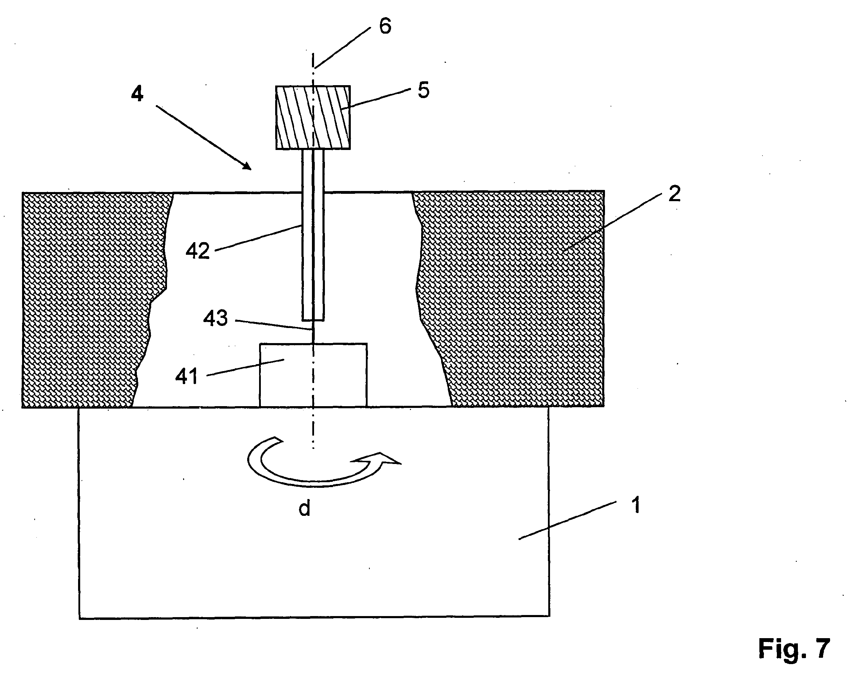

Die Figur 7 zeigt das Gebäude 1 der Figur 1 in einer schematischen Seitenansicht mit teilweise aufgeschnittenem Dach 2. Im Dachbereich des Gebäudes 1, d.h. innerhalb dieses Gebäudes 1 und damit geschützt vor den Witterungseinflüssen und dem Wind, ist ein Generator 41 angeordnet, der mittels einer Antriebswelle 43 mit dem auf dem Dach 2 angeordneten Rotor 5 verbunden ist, derart, dass Bewegungsenergie entlang der Drehachse 6 vom Rotor 5 auf den Generator 41 übertragen werden kann (gemäß Drehrichtung d). Nicht dargestellt sind etwaige Kardangelenke und Getriebe entlang der Antriebswelle 43. Bevorzugt ist vorgesehen, dass der Generator 41 direkt unterhalb des Rotors 5 angeordnet ist, wodurch eine einfach ausgebildete und im wesentlichen gerade verlaufende Antriebswelle 43 eingesetzt werden kann, was Kosten und Montageaufwand spart. Bevorzugt ist diese Antriebswelle 43 als kreiszylindrischer oder ringzylindrischer Stab bzw. Hohlstab ausgebildet. Die Antriebswelle 43 verläuft teilweise durch eine Aufnahme 42, wodurch die Antriebswelle 43 geführt und geschützt ist. Die Aufnahme 42 ist am Gebäude 1 befestigt. Bevorzugt ist diese Aufnahme 42 durch ein handelsübliches Rohr (bspw. mit Kreisquerschnitt) gebildet. Die Aufnahme 42 dient ebenfalls zur Befestigung des Rotors 5 auf dem Dach 2 des Gebäudes 1, wodurch sich eine äußerst einfache Montage der Windkraftanlage 4 auf dem Gebäude 1 bzw. dem Dach 2 ergibt. Die erfindungsgemäße Windkraftanlage 4 ist daher insbesondere auch zur Nachrüstung geeignet. Die Verwendung einer Antriebswelle die in einer Aufnahme aufgenommen ist, wobei diese Aufnahme gleichzeitig zur Befestigung des Rotors dient, beschränkt sich erfindungsgemäß nicht nur auf die hier gezeigte Dachmontage der Windkraftanlage.

## Patentansprüche

1. Rotor für eine Windkraftanlage zur Montage, vorzugsweise Dachmontage, auf einem Gebäude, insbesondere mit einer vertikalen Drehachse (6),
umfassend eine Rotornabe (8) welche die Drehachse (6) umschließt und wenigstens ein Rotorblatt (9),
**dadurch gekennzeichnet,**
**dass** das Rotorblatt (9) vollflächig ausgebildet ist und im wesentlichen eine rechteckige Form aufweist, mit einer radial innen liegenden Kante (91), einer radial außen liegenden Kante (93), einer sich radial erstreckenden unteren Kante (94) und einer sich radial erstreckenden oberen Kante (92), wobei
dieses Rotorblatt (9) ausgehend von seiner unteren Kante (94) in Richtung der oberen Kante (92) spiralförmig um die Rotornabe (8) verdreht ausgebildet ist.

2. Rotor (5) für eine Windkraftanlage nach Anspruch 1,
**dadurch gekennzeichnet,**
**dass** das Rotorblatt (9) mit seiner innen liegenden Kante (91) an der Rotornabe (8) befestigt ist, bevorzugt über seine gesamte Höhe.

3. Rotor (5) für eine Windkraftanlage nach Anspruch 1 oder 2,
**dadurch gekennzeichnet,**
**dass** die innen liegende Kante (91) des Rotorblatts (9) gerade und parallel zur Drehachse (6) und die außen liegende Kante (93) gerade und windschief zur Drehachse (6) verläuft.

4. Rotor (5) für eine Windkraftanlage nach einem der Ansprüche 1, 2 oder 3,
**dadurch gekennzeichnet,**
**dass** das Rotorblatt (9) an der Rotornabe (8) unter einem Flächenwinkel befestigt ist, der kleiner als 90° ist.

5. Rotor (5) für eine Windkraftanlage nach einem der vorausgehenden Ansprüche,
**dadurch gekennzeichnet,**
**dass** die untere Kante (94) und/oder die obere Kante (92) des Rotorblatts (9) gerade ausgebildet ist, und bevorzugt in Bezug auf die Drehachse (6) im wesentlichen rechtwinkelig orientiert ist/sind.

6. Rotor (5) für eine Windkraftanlage nach einem der vorausgehenden Ansprüche,
**dadurch gekennzeichnet,**
**dass** das Rotorblatt (9) zwischen seiner innen liegenden Kante (91) und seiner außen liegenden Kante (93) konkav ausgebildet ist, bevorzugt über seine gesamte Höhe.

7. Rotor (5) für eine Windkraftanlage nach einem der vorausgehenden Ansprüche,
**dadurch gekennzeichnet,**
**dass** das Rotorblatt (9) als dünnwandiges Freiflächen-Formteil mit im wesentlichen konstanter Wanddicke ausgebildet ist.

8. Rotor (5) für eine Windkraftanlage nach einem der vorausgehenden Ansprüche,
**dadurch gekennzeichnet,**
**dass** das Rotorblatt (9) an seiner unteren (94) und/oder oberen (92) Kante eine Versteifung (12, 11) aufweist.

9. Rotor (5) für eine Windkraftanlage nach einem der vorausgehenden Ansprüche,
**dadurch gekennzeichnet,**
**dass** das Rotorblatt (9) zwischen seiner außen liegenden Kante (93) und seiner oben liegenden (92) und/oder seiner unten liegenden Kante (94) abgerundete Ecken (97) aufweist.

10. Rotor (5) für eine Windkraftanlage nach einem der vorausgehenden Ansprüche,
**dadurch gekennzeichnet,**
**dass** das Rotorblatt (9) aus einem Faserverbund, insbesondere mit Naturfasern, gebildet ist.

11. Rotor (5) für eine Windkraftanlage nach einem der vorausgehenden Ansprüche,
**dadurch gekennzeichnet,**
**dass** dieser sieben oder neun im Wesentlichen gleich ausgebildete Rotorblätter (9) aufweist, die in gleichen Winkelabständen um die Rotornabe (8) herum angeordnet sind.

12. Windkraftanlage zur Montage, insbesondere Dachmontage, auf einem Gebäude (1) umfassend einen Rotor (5) nach einem der vorausgehenden Ansprüche.

13. Windkraftanlage (4) nach Anspruch 12,
**dadurch gekennzeichnet,**
**dass** diese einen Windabweiser (13) aufweist, bevorzugt in Form einer Rohrhalbschale, zur Abdeckung der gegen die Windrichtung zurückbewegten Rotorblätter (9).

14. Windkraftanlage (4) nach Anspruch 12 oder 13,
**dadurch gekennzeichnet,**
diese wenigstens einen Generator (41) umfasst, der zum Rotor (5) entfernt angeordneten und mittels einer Übertragungseinrichtung, insbesondere einer Antriebswelle (43), vom Rotor (5) angetrieben ist.

15. Windkraftanlage (4) nach Anspruch 14,
**dadurch gekennzeichnet,**
der Generator (41) im Dachbereich des Gebäudes (1) angeordnet ist und die Übertragungseinrichtung zumindest teilweise innerhalb einer Aufnahme (42) angeordnet ist, die gleichfalls zur Befestigung des Rotors (5) dient.
